Europäisches Patentamt

(19) European Patent Office

Office européen des brevets

(11) Publication number: **0 167 108**

**A2**

(12) # EUROPEAN PATENT APPLICATION

(21) Application number: **85107946.7**

(22) Date of filing: **27.06.85**

(51) Int. Cl.⁴: **H 04 M 1/03**

(30) Priority: **29.06.84 US 626355**

(43) Date of publication of application:
**08.01.86 Bulletin 86/2**

(84) Designated Contracting States:
**BE DE FR GB**

(71) Applicant: **WANG LABORATORIES INC.**
**One Industrial Avenue**
**Lowell, MA 01851(US)**

(72) Inventor: **Loose, Duane Morgan**
**9 Smokerise Drive**
**Chelmsford, MA. 01824(US)**

(72) Inventor: **Mowrer, Kevwin Brice**
**7 Rockland Street**
**Nashua New Hampshire 03060(US)**

(72) Inventor: **Nolan, Peter Roch**
**15 Jenness Road**
**Brookline, MA. 02146(US)**

(74) Representative: **Behrens, Dieter, Dr.-Ing. et al,**
**Patentanwälte WUESTHOFF-V.**
**PECHMANN-BEHRENS-GOETZ Schweigerstrasse 2**
**D-8000 München 90(DE)**

(54) Telephone handset.

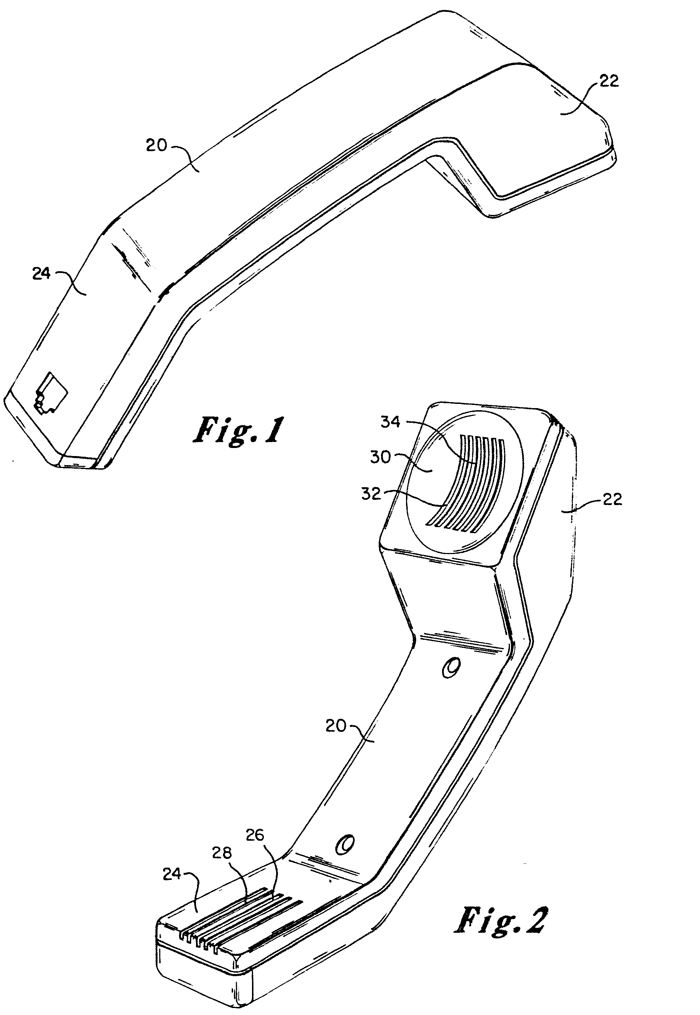

(57) The generally rectangular cross section of a telephone handset handle (20) extends through a microphone portion (24) of the handset (Fig. 1). The microphone portion (24) is angled about 38 degrees from the handle (20). The handle (20) has a width of about 1.5″ (38 mm) and a depth of about .7″ (18mm) to meet the requirements of 98% of the user population. A speaker portion (22), angled about 15 degrees from the handle (20), has a concave depression (30) to be seated against a user's ear. The distance between the center of the speaker depression (30) and the microphone cavity (26) is about 5.8″ (147 mm). The microphone portion (24) is about 2″ (50mm) long and has grooves (28) extending to its end. Baffles (52, 54) extend across the hollow of the handle to acoustically isolate the speaker and microphone portions of the handset. To facilitate assembly, the connector and microphone are first fixed to a holder (64) without the need for adhesive or additional fasteners. The speaker (40) and holder (64) are then positioned in a base section (42) of the handset without the need for adhesive or additional fasteners. The holder (64) may restrain a magnet element (110). A top section (44) of the handset is secured under a lip (98) at one end and by a spring clip (100) at the other end.

./...

*Fig.3*

PATENTANWÄLTE

WUESTHOFF - v. PECHMANN - BEHRENS - GOETZ

EUROPEAN PATENT ATTORNEYS

LR. ING. FRANZ WUESTHOFF
DR. PHIL. FRANZ WUESTHOFF (1927-1956)
DIPL.-ING. GERHARD PULS (1952-1971)
DIPL.-CHEM DR. E. FREIHERR VON PECHMANN
DR.-ING. DIETER BEHRENS
DIPL.-ING. DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 271 60 63 (III)

EP-59 103
Wang Laboratories, Inc.
Lowell, MA., USA

## TELEPHONE HANDSET

This invention relates to an ergonomically designed telephone handset which additionally provides improved acoustic coupling of the handset speaker to the user's ear and improved manufacturability.

The most widely used conventional telephone handset incorporates circular microphone and speaker portions at each end of a handle portion. The ear is received by a frustoconical depression in the speaker portion. The handle is 3.5" (90 mm) long, 1.315" (34 mm) wide and .86" (22 mm) thick. The speaker and microphone portions are respectively angled 13 and 18.5 degrees relative to the handle portion. The distance from the center of the speaker to the center of the microphone is about 5.8" (147 mm).

With smaller microphones now available, handsets have been designed without the large circular microphone portion. The larger speaker portion is still required to fit over the ear, but many designs utilize a concave depression rather than the more conventional frustoconical depression. The less abrupt transition from the handle portion to the microphone portion has several advantages including allowing a greater user population to comfortably hold the handset in a wider variety of grip positions, including actually gripping the microphone portion as a handle, providing a handset which is lighter in appearance and weight, and providing a handset which occupies less space as it rests on the main body of the telephone instrument.

The problem with the newer handsets incorporating the smaller microphones is that the dimensions and relative angles of the handle, speaker, and microphone portions have not been optimally designed to satisfy a large percentage of the population for comfort and usability. Instead, the dimensions of the handsets having the smaller microphone portions have been based on the more conventional handset or on appearance. The invention as claimed is intended to remedy these drawbacks by having ergonomically determined dimensions and relative angles of the handle, speaker, and microphone portions which most comfortably meet the needs of over 98% of the population, and also provides improved acoustic coupling of the handset speaker to the user's ear.

A telephone handset embodying this invention includes the typical microphone portion, speaker portion and handle portion of an elongated housing. In accordance with principles of the invention, the microphone portion has approximately the same cross section as the handle portion so that it serves as an angled extension of the handle portion. The speaker portion is angled 13 to 17 degrees, preferably 15 degrees, from the handle portion, and the microphone portion is angled 35 to 40 degrees, preferably 38 degrees, from the handle portion. The distance between the center of the speaker to the center of the microphone is between 140 and 152 mm and is preferably 5.8" (147 mm) The speaker is offset from the handle to provide a clearance of at least 1" (25 mm).

For maximum comfort, the handle and microphone portions are about 1.5" (38 mm) wide and .72"(18mm) deep. So that the user will sense that he is speaking directly into the microphone, the microphone portion is about 2" (50 mm) long. For the same reason and for ease of cleaning of slots over the microphone, the slots extend as grooves to the end of the microphone portion.

The foregoing and other objects, features and advantages of the invention will be apparent from the following more particular description of a preferred embodiment of the invention, as illustrated in the accompanying drawings in which like reference characters refer to the same parts throughout the different views. The drawings are not necessarily to scale, emphasis instead being placed upon illustrating the principles of the invention.

Fig. 1 is a perspective view from the top of a telephone handset embodying the present invention;

Fig. 2 is a perspective view of the base of the telephone handset of Fig. 1;

Fig. 3 is a longitudinal cross sectional view of the handset of Figs. 1 and 2;

Fig. 4 is a plan view of the interior of the top section of the telephone handset housing;

Fig. 5 is a longitudinal sectional view of the section of the housing shown in Fig. 4;

Fig. 6 is a longitudinal sectional view of the base section of the telephone handset;

Fig. 7 is a plan view of the base section of Fig. 6;

Fig. 8 is a longitudinal sectional view of a microphone/connector holder in the handset of Fig. 3, enlarged;

Fig. 9 is a plan view of the holder of Fig. 8;

Fig. 10 is a plan view similar to Fig. 9 but with the connector positioned on the holder.

A telephone handset embodying principles of the present invention is shown in Figs. 1, 2 and 3. It includes the typical handle portion 20 between a speaker portion 22 and a microphone portion 24. The handle portion and the microphone portion have the same rectangular cross section.  The microphone portion includes a microphone cavity 26 across which ribs 28 extend.  The ribs 28 extend beyond the cavity 26 to the end of the microphone portion to add to the aesthetic · quality of the handset and further to form grooves which facilitate cleaning of the spaces between the ribs.

The speaker portion is enlarged to provide a concave depression 30 which fits over the user's ear.  A speaker cavity 32 is provided in the depression 30 and it is spanned by ribs 34 similar to the ribs 28 of the microphone.  The ribs extend beyond the cavity 32 to give the appearance that the speaker is centered in the depression 30.

The dimensions and relative angles of the three portions of the handset have been ergonomically determined  to satisfy 98% of the adult male population and 98% of the adult female population.  This large user population is facilitated by the common cross section of the handle and microphone portions.  A given length handle portion is comfortable with larger hands because there is no interference from the large bowl which surrounds the conventional microphone portion.

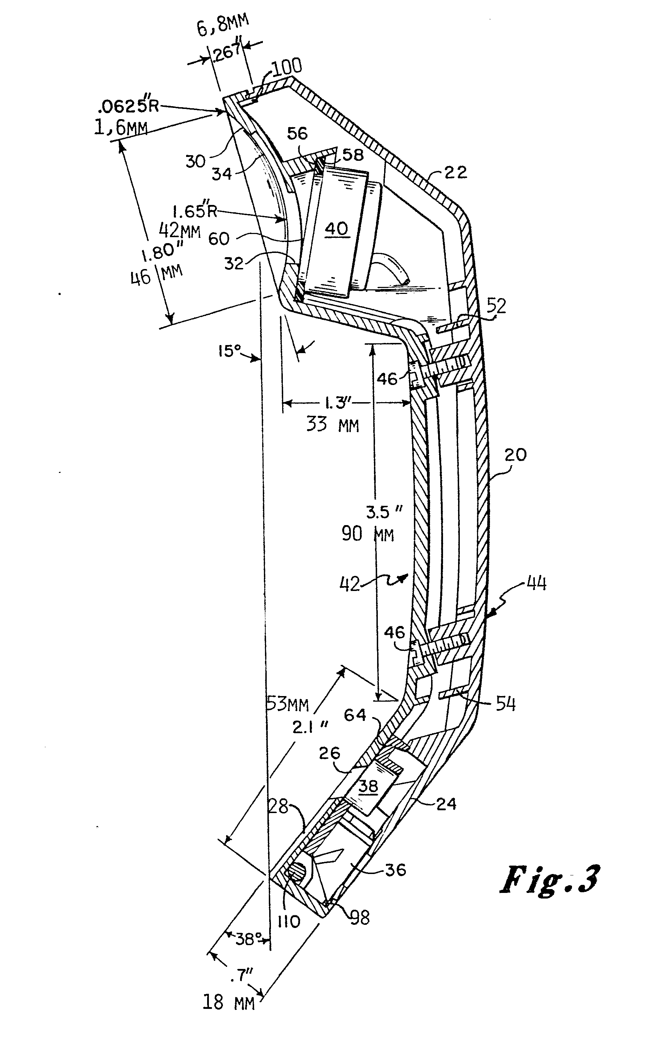

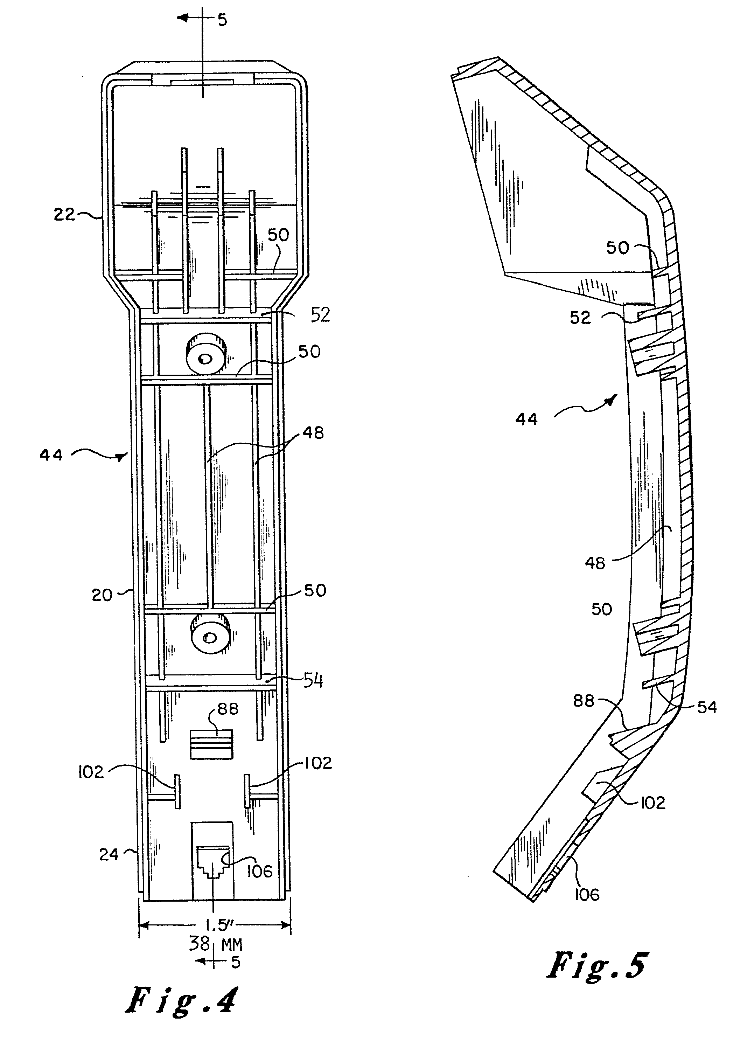

The handle portion is of generally rectangular cross section with rounded edges.  It has been determined that the comfort of the handle is directly related to the width of the handle and its depth.  In the preferred embodiment, the width is about 1.5" (38mm) and the depth is about .72" (18 mm) as shown in Figs. 4 and 3 respectively.  The handle is curved somewhat between the end portions.  The handle shown is curved about a 23" (585 mm) radius.

To allow the handle to be gripped by a large hand without interference between the hand and face, the plane of the rim of the speaker depression should be displaced from the handle to provide a clearance of over one inch. As shown in Fig. 3, a clearance of 1.3" (33mm) is provided.

With the smaller microphone portion extending smoothly from but angled relative to, the handle portion, it has been found that users tend to draw the microphone end of the handle portion closer to the face. Therefore, the angle that the speaker depression 30 makes with the handle portion has been increased from the conventional 13 degrees to 15 degrees as indicated in Fig. 3. An angle of greater than 17 degrees would cause the handle to be placed too close to the user's cheek if a proper seal were maintained between the ear and the speaker.

The angle of the microphone portion relative to the handle is a function of the handle length. With the preferred handle length of about 3.5" (90 mm), an angle of 38 degrees, shown in Fig. 3, has been found to best position the microphone within the voice cone of the largest user population. The distance between the center of the speaker to the center of the microphone should be between 5.5" (140mm) and 6.0" (152 mm), preferably 5.8" (147 mm). Thus, with increased length, the microphone angle would be increased somewhat. An angle within the range. of 35 to 40 degrees is believed best.

It can be seen best from Fig. 3 that the microphone portion extends well beyond the microphone cavity 26. The purpose of that extension is two-fold. First, it provides a convenient space in which to position the connector 36 of the handset and permits that connector to be positioned near the end of the microphone portion. Further, the length of the microphone portion was found important due to ergonomic considerations. Although a very sensitive microphone 38 is used in the handset, and thus need not be positioned directly in front of the user's mouth, the user does not recognize this and attempts to position the microphone directly in front of the mouth. With the extension of the microphone portion to about 2" (50 mm) and with the ribs 28 which extend to the end of the microphone portion, the user has the perception of a microphone positioned directly in front of the mouth even when the microphone is in fact somewhat to the side. Thus, the user does not attempt to angle the handle portion any further in an attempt to speak directly into the microphone.

The acoustic coupling of the speaker 40 to the user's ear for maximum loudness and tone quality is optimized by the dimensions of the speaker depression 30. Rather than the conventional frustoconical depression, the depression 30 is spherical and concave; that is, the depression approximates a portion of a spherical surface. The diameter of the circular rim about the depression 30 is 1.8" (46 mm), somewhat larger than the 1.71" (43,4 mm) of conventional phones. This larger diameter depression has been found to provide a better seal with a larger user population. The edge of the depression is rounded about a radius of .0625" (1,6mm) provide a comfortable and effective acoustic seal between the speaker portion and the user's ear.

The depth of the depression 30 has been determined, through acoustic testing, to provide the loudest speaker output where a spherical depression is used. To allow proper seating of the speaker portion against the ear and to avoid degradation of the sound from the speaker, that depression should be about .267" (6,8 mm) deep.

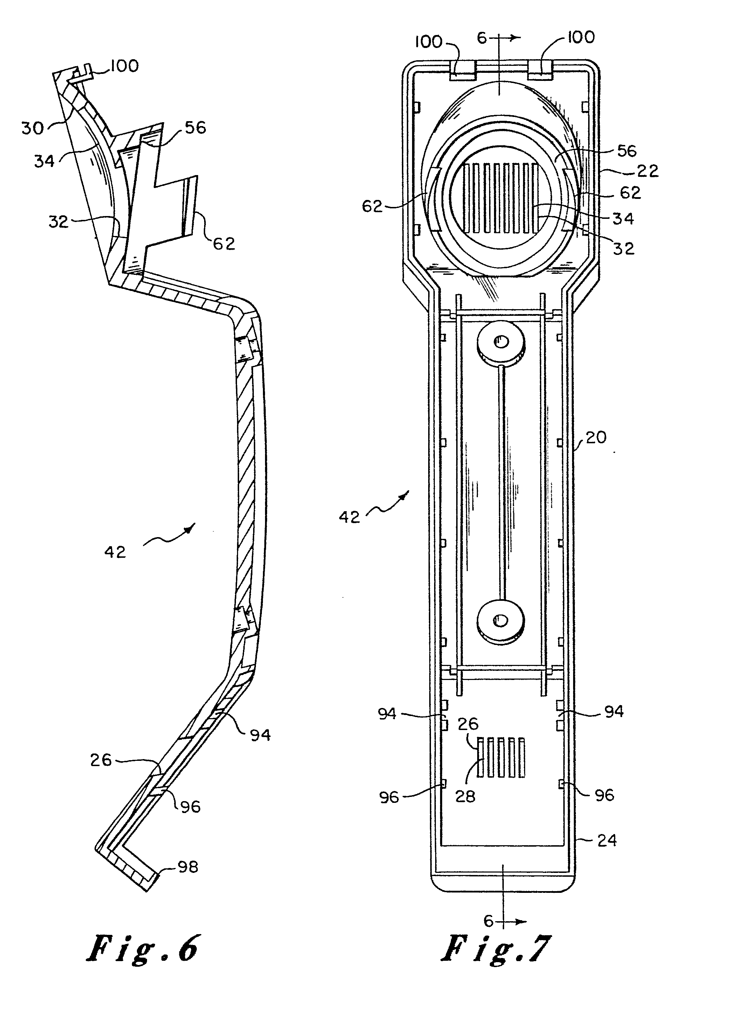

The detailed construction of the telephone handset can be best understood with reference to Figs. 3-10. The housing of the handset is formed of a base section 42 shown in Figs. 6 and 7 and a top portion 44 shown in Figs. 4 and 5. The two are fastened together by screws 46.

As shown in Figs. 4 and 5, the top section includes longitudinal ribs 48 and transverse ribs 50 for structural stiffness. Additionally, transverse baffles 52 and 54 extend from the top section across the hollow of the handle portion. Those baffles serve to acoustically isolate the interior of the speaker portion 22 from the interior of the microphone portion 24 of the handset. That isolation minimizes acoustic feedback from the speaker 40 to the microphone 38.

In the speaker portion of the handset, a seat 56 is provided for the speaker element 40. Due to space requirements, the speaker 40 is not positioned coaxially with the depression 30. However, extensions of the ribs 34 beyond the speaker cavity 32 give the appearance of a coaxial speaker.

As shown in Fig. 3, an acoustic seal ring 58 is provided between the speaker 40 and the annular seat 56. That seal minimizes losses from the speaker by assuring that the sound from the speaker travels through the cavity 32 and not into the interior of the speaker portion 22. The seal also allows for manufacturing dimensional tolerances. The space within the seal 58 is spanned by an acoustically transparent fabric 60 which is adhered to the gasket 58 prior to assembly. The fabric 60 helps keep debris from the speaker 40 and also adds to the aesthetic quality of the handset.

This speaker is retained against the gasket 58 and seat 56 by a pair of spring fingers 62, one of which is shown in Fig. 6. During assembly, the speaker 40 need only be pressed past the fingers 62 against the gasket 58 on the seat 56.

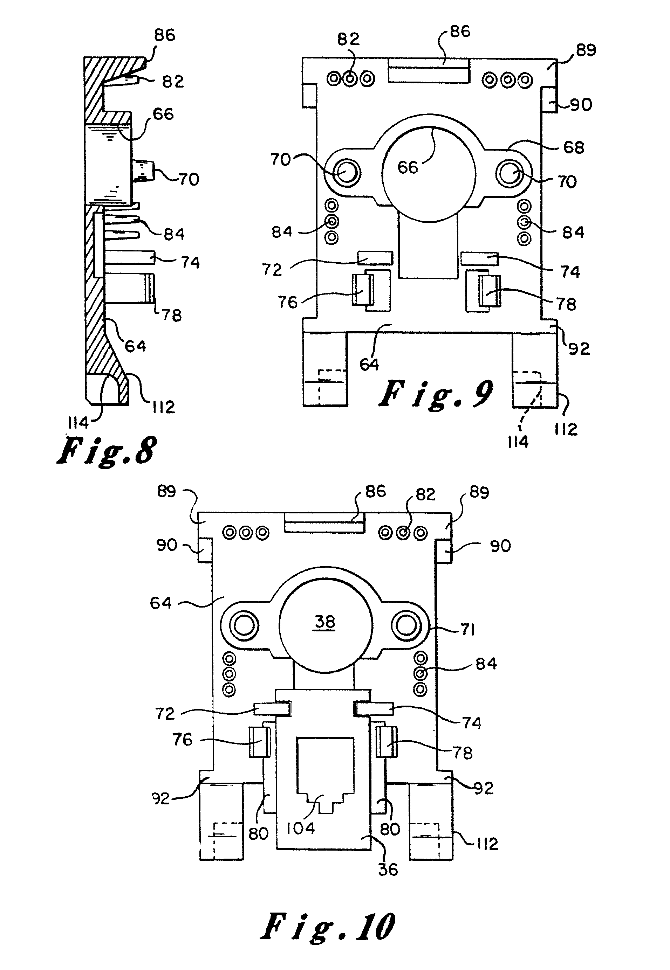

At the opposite end of the handset, a microphone 38 and connector 36 are contained in the microphone portion. The connector has electrical leads to both the microphone 38 and the speaker 40. To ease top and base section molding requirements and facilitate assembly, the microphone and connector are positioned on a molded holder 64 shown enlarged in Figs. 8 and 9. The holder includes a center cavity 66 which receives a microphone. The microphone has elastomeric side tabs 71 (Fig. 10) which conform to the platform 68. Pins 70 are interference fit into holes in the elastomeric tabs to retain the microphone on the holder 64. The connector 36, shown in Fig. 10, is pressed against the holder such that ribs 72 and 74 slide into grooves on opposite sides of the connector 36. As the connector is slid down the ribs 72 and 74 firmly against the holder 64, it is grasped by spring clips 76 and 78 about shoulders 80 of the connector.

The connector 36 is coupled to each of the microphone and the speaker through electrical leads. Two sets of pins 82 and 84 are provided to route and retain those leads to facilitate assembly.

A finger 86 extends away from the holder at one end thereof. That finger is retained by a complementary finger 88 in the top section 44 of the handset when the handset is assembled. Side tabs 89 with inclined shoulders 90 are provided at one end of the holder and additional tabs 92 are provided at the other end of the holder. In assembly, after the microphone and connector have been positioned on the holder and the connecting leads have been routed, the speaker 40 is set in the speaker portion of the base 42 as described above, and the holder is set in the microphone portion. The tabs 89 are dropped into slots 94 formed adjacent to the side walls of the base 42, and the tabs 92 are then dropped beyond the tabs 96. The holder thus rests in its proper position in the base 42.

A cylindrical bar magnet 110 is restrained against the base section 42 by arms 112 which extend from the holder 64. The arms 112 have rounded cutaways 114 for receiving the respective ends of the magnet. The magnet can trigger a magnetically actuated switch which may replace the conventional magnetic hookswitch on the telephone set.

The microphone end of the top section 44 is then slid axially under the lip 98 of the base section 42 and the speaker end of the top section 44 is pressed against the base in order that spring clips 100 engage the top section. The assembly is completed by joining the two sections with the screws 46. The lip 98 provides very secure retention of one end of the top section and, with the uniform width of the microphone portion, allows for ease of alignment of the two sections in that the top section need only be slid in axially over the base section. When the top section is thus seated on the base section, the retaining finger 88 of the top section presses against the finger 86 on the holder 64. Also, two fingers 102 which run axially along either side of the microphone 38 press against the elastomeric tabs 71 on the microphone to firmly retain the microphone against the holder and the holder against the base section. With the connector properly positioned by the holder 64, a raised section 104 is brought into a complementary hole 106 in the top section 44 for suitable electrical connection of the handset.

The configuration discussed above allows the electrical components of the handset, that is the speaker, the connector and the microphone, to be preassembled into two parts joined by electrical leads. The assembly of the connector and microphone to the holder, which make up one part, can be completed without the use of any adhesives or separate fasteners. Thereafter, the two parts can be properly positioned in the base section, again without the use of adhesive or separate fastener.

While the invention has been particularly shown and described with reference to a preferred embodiment thereof, it will be understood by those skilled in the art that various changes in form and details may be made therein without departing from the spirit and scope of the invention as defined by the appended claims.

CLAIMS

1. A telephone handset comprising an elongated housing (Fig. 1) having a microphone portion (24), a speaker portion (22) and a handle portion (20) therebetween, characterized in that the microphone portion (24) has approximately the same cross section as the handle portion (20) to serve as an extension of the handle portion, the speaker portion (22) being angled between 13 and 17 degrees from the handle portion (20), the microphone portion (24) being angled between 35 and 40 degrees from the handle portion (20) and the distance between the center of a speaker concavity (30) in the speaker portion (22) to the center of a microphone opening (26) in the microphone portion (24) being between 5.5"and 6" (140 bis 152 mm).

2. A telephone handset as claimed in Claim 1 wherein the speaker portion (22) is angled about 15 degrees from the handle portion (20) and the microphone portion (24) is angled about 38 degrees from the handle portion (20).

3. A telephone handset as claimed in Claim 1 wherein the distance between the center of the speaker concavity (30) and the center of the microphone opening (26) is 5.8" (147 mm).

4. A telephone handset as claimed in Claim 1 wherein the width of the handle portion (20) and the microphone portion (24) is about 1.5" (38 mm) and the depth of the handle portion (20) and the microphone portion (24) is about .7" (18 mm).

5. A telephone handset as claimed in Claim 1 wherein the speaker portion (22) is raised from the handle portion (20) to provide a clearance of at least 1" (25 mm).

-12-

6.  A telephone handset as claimed in Claim 1 wherein the microphone portion (24) is about 2" (50 mm).

7.  A telephone handset as claimed in Claim 6 wherein the microphone portion (24) includes grooves (28) formed therein from the end of the microphone portion (24) across a microphone cavity (26).

8.  A telephone handset as claimed in Claim 1 wherein the microphone portion (24) includes grooves (28) formed therein from the end of the microphone portion (24) across a microphone cavity (26).

9.  A telephone handset comprising an elongated housing (Fig. 1) having a microphone portion (24), a speaker portion (22) and a handle portion (20) therebetween, characterized in that the microphone portion (24) has approximately the same cross section as the handle portion (20) to serve as an extension of the handle portion with a width of about 1.5" (38 mm) and a depth of about .7"(18mm),the speaker portion (22) being raised from the angle portion to provide a clearance of at least 1" (25 mm) and being angled about 15 degrees from the handle portion (20) , the microphone portion (24) being about 2" (50 mm)   long with grooves (28) formed therein from the end thereof across a microphone cavity (26) and  being angled about 38 degrees from the handle portion (20), and the distance between the center of a speaker concavity (30) in the speaker portion (22) to the center of a microphone cavity (26) in the microphone portion (24) being about 5.8" (147 mm).

**Fig.1**

**Fig.2**

59 103
g Lab.

*Fig.3*

**Fig.4**

**Fig.5**

*Fig.6*

*Fig.7*

**Fig.8**

**Fig.9**

**Fig.10**